# EUROPÄISCHE PATENTSCHRIFT

(11) **EP 4 474 168 B1**
(45) Veröffentlichungstag und Bekanntmachung des Hinweises auf die Patenterteilung: **06.05.2026**
(21) Anmeldenummer: 24163551.5
(22) Anmeldetag: 14.03.2024
(51) Int. Cl.: B60B 27/00, B60B 27/06

(54) **RADLAGERUNGSANORDNUNG UND VERFAHREN ZUR MONTAGE EINER SOLCHEN RADLAGERUNGSANORDNUNG**
WHEEL BEARING ASSEMBLY AND METHOD FOR ASSEMBLING SUCH A WHEEL BEARING ASSEMBLY
ENSEMBLE DE ROULEMENT DE ROUE ET PROCÉDÉ DE MONTAGE D'UN TEL ENSEMBLE DE ROULEMENT DE ROUE

(30) Priorität: 07.06.2023 DE 102023114988
(43) Veröffentlichungstag der Anmeldung: 11.12.2024
(73) Patentinhaber: AUDI AG, 85057 Ingolstadt (DE)
(72) Erfinder: Albl, Johannes, 85055 Ingolstadt (DE); Frisch, Michael, 94513 Schönberg (DE)

(56) Entgegenhaltungen:
- WO-A1-2015/046361
- DE-A1- 102009 051 930
- DE-A1- 102018 103 219
- DE-A1- 102019 128 622
- FR-A1- 3 096 098
- US-B2- 8 025 578

## Beschreibung

Die Erfindung betrifft eine Radlagerungsanordnung gemäß dem Oberbegriff des Anspruches 1 sowie gemäß dem Anspruch 9 ein Verfahren zur Montage einer solchen Radlagerungsanordnung.

Eine beispielhafte Radlagerungsanordnung für ein Kraftfahrzeug weist eine Gelenkwelle, eine Radnabe und eine Schraube mit einem Schraubenkopf auf. Zusätzlich sind als Montageteile für die Schraube eine Schraubenfeder als Vorspanneinrichtung und ein O-Ring als Mitnahmemittel vorgesehen. Die Radnabe ist mittels der Schraube mit der Gelenkwelle drehmomentübertragend verbunden. Zwischen dem Schraubenkopf und der Gelenkwelle ist die Radnabe verspannt. Zwischen einem Schaft der Schraube und der Radnabe ist die Schraubenfeder angeordnet, wobei der Schaft eine Anlagefläche für die Schraubenfeder bereitstellt und daher entsprechend geometrisch umgestaltet ist.

Nachteilig an der Radlagerungsanordnung ist, dass die Schraube mit den Montageteilen aufwändig herzustellen ist. Ein weiterer Nachteil besteht darin, dass die Schraube durch die Bereitstellung der Auflagefläche für die Schraubenfeder nicht-gewichtsoptimal gestaltet ist.

Die DE 10 2007 057 047 A1 offenbart ein Verfahren zum Zusammenbau eines Radnaben-Bauteils mit einem hiermit über eine Stirnverzahnung drehfest verbundenen Wellengelenk-Bauteil und eine entsprechende Verbindungsanordnung. Eine Schraube ist an einem der genannten Bauteile über ein Federelement abgestützt, dessen möglicher Federweg zwischen einer Zahn-auf-Zahn-Stellung und einer Zahn-in-Lücke-Stellung der Stirnverzahnung nicht nennenswert geringer als die Höhe der Zähne der Stirnverzahnung ist.

Aus der DE 10 2013 205 340 B3 ist eine Montagehilfe für eine Radlagereinheit bekannt, bei der der Radlagernabe oder der Gelenkglocke als Montagehilfe eine elastische Spreizhülse zugeordnet wird, die mit dem zugehörigen weiteren Bauteil zusammenwirkt. Der Aufbau sowie die Einbaulage der Spreizhülse bewirken, dass erst bei Erreichen einer Endlage, in der sich für die Stirnverzahnungen der Radlagernabe und der Gelenkglocke eine Zahn-in-Lücke-Stellung der Stirnverzahnungen einstellt, die Spreizhülse über eine Schnapp- oder Klickverbindung verrastet, dabei lokal auffedert und eine zentrale Zuführöffnung der Spannschraube in die Gelenkglocke freigibt.

Die DE 10 2018 103 219 A1 offenbart einen Radflansch mit einer Rotationsachse für ein angetriebenes Rad eines Kraftfahrzeugs. Der der Radflansch weist zumindest ein Anschlusselement zum Anbinden eines Rads, wobei das Anschlusselement eine Stirnverzahnung und eine Zentralbohrung aufweist, ein Gelenkgehäuse mit einer zu der Stirnverzahnung des Anschlusselements korrespondierenden Gegenstirnverzahnung und mit einer zentralen Gewindeaufnahme, eine Zentralschraube mit einem Schraubenkopf, wobei die Zentralschraube in der Zentralbohrung des Anschlusselements angeordnet und in der Gewindeaufnahme des Gelenkgehäuses verschraubt ist sowie ein Elastomerelement auf, welches zwischen dem Schraubenkopf der Zentralschraube und dem Anschlusselement angeordnet ist und in einer Zahn-auf-Zahn-Stellung der Stirnverzahnung mit der Gegenstirnverzahnung über einen axialen Federweg derart stauchbar ist, dass das Elastomerelement eine axiale Federkraft aufbringt.

Aus der DE 10 2019 128 622 A1 ist eine Radlagereinheit für ein Fahrzeug bekannt. Die Radlagereinheit umfasst eine Welle, eine Radnabe, eine Zentralschraube und ein Federelement, wobei die Radnabe und die Welle koaxial zueinander angeordnet sind und jeweils eine stirnseitige Verzahnung zur drehfesten Verbindung aufweisen, wobei die Welle eine zentrale Gewindebohrung aufweist, in die die Zentralschraube zur Verspannung der Radnabe mit der Welle eingedreht ist, wobei das Federelement topfförmig ausgebildet ist, einen ersten und zweiten Flanschabschnitt sowie einen dazwischen angeordneten und diese miteinander verbindenden Ringabschnitt umfasst, wobei der Ringabschnitt zumindest teilweise radial an der Radnabe abgestützt ist, wobei der erste Flanschabschnitt zumindest teilweise radial nach außen ausgebildet ist und axial an der Radnabe und/oder an der Zentralschraube abgestützt ist, und wobei der zweite Flanschabschnitt zumindest teilweise radial nach innen sowie elastisch federnd ausgebildet ist und axial an der Zentralschraube abgestützt ist.

Die WO 2015/046361 A1 offenbart eine gattungsgemäße Radlagerungsanordnung. Aus der DE 10 2009 051930 A1 ist eine Radlagereinheit mit axialer Verzahnung bekannt. Die FR 3 096 098 A1 offenbart ein System zum Drehantrieb eines Kraftfahrzeugrades.

Die Aufgabe der Erfindung besteht darin, eine Radlagerungsanordnung bereitzustellen, die mit geringem Herstellaufwand und geringen Herstellkosten herstellbar ist. Eine weitere Aufgabe der Erfindung besteht darin, ein Verfahren bereitzustellen, mit dem eine Radlagerungsanordnung kostengünstig und prozesssicher montierbar ist.

Die Aufgabe ist durch die Merkmale der unabhängigen Ansprüche gelöst. Bevorzugte Weiterbildungen der Erfindung sind in den Unteransprüchen offenbart.

Erfindungsgemäß ist eine Radlagerungsanordnung, vorzugsweise für ein Kraftfahrzeug, vorgeschlagen, und zwar mit einer Gelenkwelle, einer Radnabe, einer Schraube mit einem Schraubenkopf und einem Vorspannelement, wobei, vorzugsweise in einem endmontierten Zustand der Radlagerungsanordnung, die Radnabe mittels der Schraube mit der Gelenkwelle, vorzugsweise drehmomentübertragend, verbunden ist. Erfindungsgemäß ist das Vorspannelement zwischen dem Schraubenkopf, vorzugsweise einer Kopfunterseite des Schraubenkopfes, und der Radnabe angeordnet und/oder verspannt. Durch den Einsatz des Vorspannelementes können zusätzliche, der Schraube zugeordnete Montagteile entfallen. Dies hat den Vorteil, dass die Radlagerungsanordnung im Vergleich zu bekannten Radlagerungsanordnungen gewichtsreduziert ist. Außerdem ist die Montage der Radlagerungsanordnung aufgrund des Entfalls zusätzlicher Montageteile einfach und mit geringem logistischen Aufwand durchführbar. Zusätzlich ist bei dieser Radlagerungsanordnung auch keine kostenintensive Korrosionsschutzbeschichtung erforderlich, da die Rad- und/oder Bremsscheibenzentrierung bei dieser Radlagerungsanordnung nicht von der Radnabe, sondern von dem Vorspannelement bereitgestellt wird.

Bevorzugt kann vorgesehen sein, dass Gelenkwelle durch eine Antriebswelle gebildet ist, die dazu geeignet ist und/oder dazu ausgebildet ist, ein Antriebsdrehmoment von einem Antriebsaggregat eines Fahrzeuges auf die Radnabe zu übertragen.

Beispielhaft kann vorgesehen sein, dass das Vorspannelement ein separates und/oder einstückiges und/oder materialeinheitliches und/oder von der Radnabe separates Bauteil ist. Da es sich bei der Radnabe in aller Regel um ein geschmiedetes Bauteil handelt, bei dem komplexe Geometrien nur mit hohem Aufwand realisierbar sind, kann die Radnabe mit geringerer Komplexität hergestellt werden und das Vorspannelement entsprechend den jeweiligen Anforderungen frei gestaltet werden. Dies spart Kosten und Herstellungsaufwand, da die geschmiedete Radnabe dafür nicht oder zumindest nicht wesentlich verändert werden muss.

Exemplarisch kann vorgesehen sein, dass das Vorspannelement einen Federabschnitt, einen Grundabschnitt, einen Konusabschnitt, einen Hülsenabschnitt und einen Umschlagabschnitt aufweist. Bevorzugt kann vorgesehen sein, dass der Federabschnitt, vorzugsweise unmittelbar, in den Grundabschnitt übergeht. Alternativ oder zusätzlich kann vorgesehen sein, dass der Grundabschnitt, vorzugsweise unmittelbar, in den Konusabschnitt übergeht. Alternativ oder zusätzlich kann vorgesehen sein, dass der Konusabschnitt, vorzugsweise unmittelbar, in den Hülsenabschnitt übergeht. Alternativ oder zusätzlich kann vorgesehen sein, dass der Hülsenabschnitt, vorzugsweise unmittelbar, in den Umschlagabschnitt übergeht.

Vorzugsweise kann vorgesehen sein, dass das Vorspannelement, vorzugsweise der Federabschnitt, unmittelbar an der Kopfunterseite der Schraube anliegt. Dies hat den Vorteil, dass eine handelsübliche Normschraube verwendet werden kann, an der auch nachträglich keine Geometrienänderungen erforderlich sind, um eine gute mechanische Anbindung an das Vorspannelement zu erreichen. Alternativ oder zusätzlich kann vorgesehen sein, dass das Vorspannelement, vorzugsweise der Grundabschnitt und/oder der Federabschnitt, unmittelbar an der Radnabe, vorzugsweise an einer Zentrierkontur der Radnabe, anliegen.

Bei einer bevorzugten Ausführungsform kann vorgesehen sein, dass das Vorspannelement einen, vorzugsweise federelastischen, Federabschnitt aufweist, der zwischen dem Schraubenkopf, vorzugsweise einer Kopfunterseite des Schraubenkopfes, und der Radnabe angeordnet und/oder verspannt ist. Alternativ oder zusätzlich kann vorgesehen sein, dass die Gelenkwelle eine Gelenkwellen-Stirnverzahnung aufweist, die mit einer Radnaben-Stirnverzahnung der Radnabe in Zahneingriff steht. Dadurch, dass nur ein Teil des Vorspannelementes, das heißt der Federabschnitt, als Feder wirkt, können andere Teile des Vorspannelementes für andere Zwecke wie bspw. als Radzentrierung für ein Fahrzeugrad gestaltet werden. Das heißt, dass das Vorspannelement nicht nur eine Funktion, bspw. eine Federfunktion, sondern auch noch andere Funktionen, wie bspw. eine Radzentrierfunktion erfüllt. Die benötigte Anzahl an Einzelbauteile zur Realisierung der Radlagerungsanordnung ist daher reduziert.

Bei einer besonders bevorzugten Ausführungsform kann vorgesehen sein, dass das Vorspannelement, vorzugsweise ein Federabschnitt des Vorspannelementes, an der Radnabe, vorzugsweise an einer Zentrierkontur der Radnabe, abgestützt ist und, vorzugsweise bei einer Montage und/oder einem Zusammenbau der Radlagerungsanordnung, eine Axialkraft auf den Schraubenkopf, vorzugsweise auf eine Kopfunterseite des Schraubenkopfes und/oder unmittelbar auf eine Kopfunterseite des Schraubenkopfes, ausübt. Vorzugsweise kann vorgesehen sein, dass das Vorspannelement die Axialkraft, vorzugsweise in Bezug auf eine Schraubenlängsachse der Schraube, entgegen einer Einschraubrichtung der Schraube, das heißt bevorzugt in positiver Schraubenlängsachsenrichtung, ausübt. Durch die Axialkraft ist es möglich, dass einmal in Zahneingriff gebrachte Stirnverzahnungen der Gelenkwelle und der Radnabe während der Montage und/oder dem Zusammenbau der Radlagerungsanordnung gegeneinander gedrückt und so auch während der Montage und/oder dem Zusammenbau in Zahneingriff gehalten werden.

Erfindungsgemäß ist vorgesehen, dass das Vorspannelement einen Hülsenabschnitt aufweist, und dass der Hülsenabschnitt, vorzugsweise eine Außenumfangsfläche des Hülsenabschnittes, eine Radzentrierfläche für ein Fahrzeugrad, vorzugsweise für eine Felge eines Fahrzeugrades, und/oder eine Bremsscheibe bildet. Wie bereits oben genannt, erfüllt das Vorspannelement eine Doppelfunktion, wobei eine erste Funktion der Doppelfunktion darin besteht, dass die Schraube bei der Montage der Radlagerungsanordnung mit der Axialkraft beaufschlagt wird. Eine zweite Funktion der Doppelfunktion besteht darin, dass das Vorspannelement die Radzentrierung für ein Fahrzeugrad eines Kraftfahrzeuges bereitstellt.

Es ist somit vorgesehen, dass nicht die Radnabe, sondern das Vorspannelement, vorzugsweise die Außenumfangsfläche des Hülsenabschnittes, die Radzentrierung und/oder die Radzentrierfläche bereitstellt und/oder bildet. Bei bspw. einem Modellwechsel erforderliche Anpassungen an der Radzentrierung betreffen daher nur das Vorspannelement und nicht die Radnabe selbst. Aufwändige Modifikationen an der Geometrie der geschmiedeten Radnabe sind daher nicht notwendig.

Bei einer exemplarischen Ausführungsform kann vorgesehen sein, dass der Federabschnitt durch Federlaschen gebildet ist, die in Umfangsrichtung um einen, vorzugsweise dem Vorspannelement zugeordneten, Vorspannelement-Durchlass verteilt angeordnet sind und unter Zwischenordnung von schlitzförmigen Ausnehmungen voneinander beabstandet sind. Je nach Anzahl der Ausnehmungen und bspw. Breite der Federlaschen kann ein gewünschtes Federungsverhalten auf konstruktiv einfache und kostengünstige Weise eingestellt werden.

Bei einer bevorzugten Ausführungsform kann vorgesehen sein, dass das Vorspannelement einen Grundabschnitt und einen Konusabschnitt aufweist, und dass der Grundabschnitt und/oder der Konusabschnitt und/oder der Hülsenabschnitt in Anlageverbindung mit der Radnabe, vorzugsweise einer Zentrierkontur der Radnabe, stehen. Die Zentrierkontur hat den Vorteil, dass über die Zentrierkontur das Vorspannelement relativ zu der Radnabe zentriert ist.

Bevorzugt kann vorgesehen sein, dass der Grundabschnitt die Form einer Lochscheibe aufweist. Alternativ oder zusätzlich kann vorgesehen sein, dass sich das Vorspannelement im Bereich des Konusabschnittes ausgehend von dem Hülsenabschnittes und bis zum Grundabschnitt, vorzugsweise nach radial innen, verjüngt. Über den Konusabschnitt wird in vorteilhafter Weise eine Selbstzentrierung des Vorspannelementes relativ zu der Radnabe erreicht.

Exemplarisch kann vorgesehen sein, dass der Grundabschnitt, vorzugsweise zusammen mit dem Federabschnitt, eine Schraubenkopf-Auflagefläche für den Schraubenkopf der Schraube bildet, und zwar vorzugsweise im endmontierten Zustand der Radlagerungsanordnung.

Besonders bevorzugt kann vorgesehen sein, dass das Vorspannelement einen Umschlagabschnitt aufweist, in den der Hülsenabschnitt unmittelbar und/oder materialeinheitlich und/oder einstückig übergeht, und dass das Vorspannelement in dem Umschlagschnitt einen parallel offenen Blechumschlag, nach vorzugsweise radial innen, aufweist. Der Umschlagabschnitt steigert die mechanische Stabilität des Vorspannelementes und steigert diese im Vergleich zu einem gerade auslaufenden Vorspannelement.

Bei einer beispielhaften Ausführungsform kann vorgesehen sein, dass die Radlagerungsanordnung ein Mitnahmemittel aufweist und/oder dass der Radlagerungsanordnung ein Mitnahmittel zugeordnet ist, wobei bevorzugt vorgesehen sein kann, dass durch das Mitnahmemittel eine Gewindereibung zwischen einem Außengewinde der Schraube und einem Innengewinde der Gelenkwelle, in Bezug auf ein Außengewinde der Schraube und/oder in Bezug auf die Schraubenlängsachse der Schraube, zumindest abschnittsweise erhöht ist. Mittels des Mitnahmemittels wird erreicht, dass die Stirnverzahnungen der Gelenkwelle und der Radnabe, sofern sie denn bei der Montage, das heißt beim Eindrehen der Schraube, eine Zahn-auf-Zahn-Stellung erreichen, geringfügig gegeneinander verdreht werden, so dass die Stirnverzahnungen miteinander in Zahneingriff kommen. Somit wird auch bei schlechter Zugänglichkeit und/oder schlechter Sicht auf die Stirnverzahnungen eine korrekte Verbindung der Radnabe und der Gelenkwelle über die jeweiligen Stirnverzahnungen erreicht.

Bevorzugt kann vorgesehen sein, dass das Mitnahmemittel derart, vorzugsweise auf der Schraube, angeordnet ist, dass die erhöhte Gewindereibung erst auftritt, insofern die Schraube soweit eingedreht ist, dass Zahnspitzen der Zähne der Gelenkwellen-Stirnverzahnung in einer gemeinsamen Ebene mit Zahnspitzen der Zähne der Radnaben-Stirnverzahnung liegen und/oder insofern die Schraube soweit eingedreht ist, dass Zahnspitzen der Zähne der Gelenkwellen-Stirnverzahnung in Zahnlücken der Radnaben-Stirnverzahnung hineinragen. Durch die spezielle Anordnungsposition des Mitnahmemittels wird erreicht, dass sich die Gelenkwelle erst dann mit der Schraube mitdreht, wenn sich die Gelenkwellen-Stirnverzahnung an der Radnaben-Stirnverzahnung abstützen kann. So ist sichergestellt, dass sich die Schraube beim Drehen der Schraube auch immer weiter in das Innengewinde der Gelenkwelle eindreht.

Bei einer besonders bevorzugten Ausführungsform kann vorgesehen sein, dass das Mitnahmemittel durch eine Beschichtung, vorzugsweise durch einen Schraubensicherungslack, gebildet ist, die auf die Schraube, vorzugsweise auf ein Außengewinde der Schraube, aufgetragen ist, und/oder dass das Mitnahmemittel dadurch gebildet ist, dass ein Durchmesser des Außengewindes, vorzugsweise ein Kern-, Außen, und/oder Flankendurchmesser des Außengewindes, größer dimensioniert ist, als ein Durchmesser des Innengewindes, vorzugsweise ein Kern-, Außen, und/oder Flankendurchmesser des Innengewindes, und/oder dass das Mitnahmemittel dadurch gebildet ist, dass eine Gewindesteigung eines Außengewindes der Schraube um eine Steigungsabweichung von einer Gewindesteigung des Innengewindes der Gelenkwelle abweicht. Die aufgeführten Varianten zur Ausgestaltung des Mitnahmemittels stellen besonders kostengünstige Möglichkeiten, bei denen die Radlagerungsanordnung mit möglichst wenigen, einzelnen Bauteilen realisierbar ist.

Erfindungsgemäß vorgeschlagen ist auch ein Fahrzeug, vorzugsweise ein Personenkraftfahrzeug, mit einer wie vorbeschriebenen Radlagerungsanordnung.

Erfindungsgemäß vorgeschlagen ist auch Verfahren zur Montage einer wie vorbeschriebenen Radlageranordnung mit einem Bereitstellungsschritt, bei dem die Gelenkwelle, die Radnabe, das Vorspannelement und die Schraube bereitgestellt werden und bei dem die Schraube mit ihrem Schaft unter Bildung einer Vormontageeinheit durch den Vorspannelement-Durchlass und durch den Radnaben-Durchlass geführt wird, und einem Vormontageschritt, bei dem die Vormontagebaugruppe und die Gelenkwelle zueinander geführt und die Schraube, vorzugsweise drehmomentübertragungsfrei, in das Innengewinde der Gelenkwelle teilweise eingedreht wird, und einem Endmontageschritt, bei dem die Schraube weiter in das Innengewinde eingedreht und mit einem vordefinierten Anzugsdrehmoment festgedreht wird. Erfindungsgemäß wird das Vorspannelement zwischen dem Schraubenkopf, vorzugsweise einer Kopfunterseite des Schraubenkopfes, und der Radnabe angeordnet und/oder verspannt.

Ausführungsbeispiele der Erfindung sind im Folgenden anhand der beigefügten, schematischen Zeichnung näher erläutert.

Es zeigen:
- Fig. 1: in einer Längsschnittansicht eine Radlagerungsanordnung im endmontierten Zustand mit einem Vorspannelement;
- Fig. 2 bis 4: jeweils in einer Längsschnittansicht Verfahrensschritte zur Montage der Radlagerungsanordnung gemäß der Fig. 1;
- Fig. 5 und 6: jeweils in einer perspektivischen Ansicht das Vorspannelement in Alleinstellung, und
- Fig. 7: in einer Längsschnittansicht das Vorspannelement in Alleinstellung.

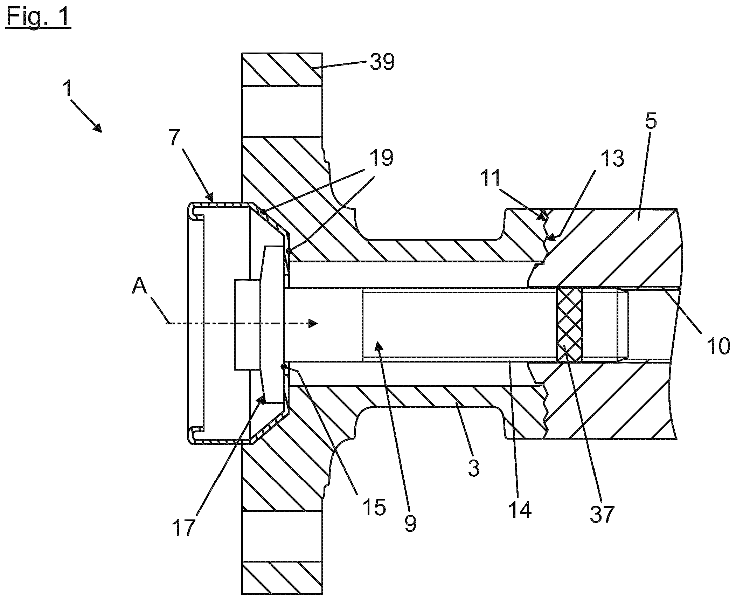

In der Figur 1 ist eine Radlagerungsanordnung 1 für ein Kraftfahrzeug (nicht dargestellt), vorzugsweise für ein Personenkraftfahrzeug, in einem endmontierten Zustand gezeigt. Die Radlagerungsanordnung 1 weist eine, vorzugsweise geschmiedete, Radnabe 3, eine Gelenkwelle 5, ein Vorspannelement 7 und eine Schraube 9 mit einer Schraubenlängsachse A auf. Die positive Schraubenlängsachsenrichtung ist in der Figur 1 mit einer Pfeilspitze gekennzeichnet. Die positive Schraubenlängsachsenrichtung entspricht der Einschraubrichtung der Schraube 9.

Die Radnabe 3 weist gelenkwellenseitig eine Radnaben-Stirnverzahnung 11 und die Gelenkwelle 5 weist radnabenseitig eine Gelenkwellen-Stirnverzahnung 13 auf. Die Radnaben-Stirnverzahnung 11 und die Gelenkwellen-Stirnverzahnung 13 korrespondieren zueinander und stehen im endmontierten Zustand der Radlagerungsanordnung 1 in Zahneingriff miteinander. Über die Radnaben-Stirnverzahnung 11 und die Gelenkwellen-Stirnverzahnung 13 sind die Radnabe 3 und die Gelenkwelle 5 im endmontierten Zustand der Radlagerungsanordnung 1 formschlüssig miteinander verbunden.

Die Schraube 9 weist ein Außengewinde 14 auf, mit dem die Schraube 9 im endmontierten Zustand der Radlagerungsanordnung 1 in ein Innengewinde 10 der Gelenkwelle 5 eingedreht und mit einem vordefinierten Anzugsdrehmoment festgedreht und/oder festgezogen ist. Im endmontierten Zustand der Radlagerungsanordnung 1 ist die Radnabe 3 mittels der Schraube 9 kraftschlüssig mit der Gelenkwelle 5 verbunden und/oder verspannt. Zwischen der Radnabe 3 und der Gelenkwelle 5 besteht im endmontierten Zustand somit sowohl eine kraft- als auch eine formschlüssige Verbindung, so dass auch große Drehmomente von der Gelenkwelle 5 auf die Radnabe 3 und umgekehrt übertragen werden können. Mit anderen Worten: Die Verbindung zwischen Gelenkwelle 5 und Radnabe 3 setzt sich zumindest aus zwei Verbindungsarten zusammen, und zwar einerseits durch die Formschlussverbindung über die Stirnverzahnungen 11 und 13 und andererseits - unter Zwischenlage der Radnabe 3 und dem Vorspannelement 7 - über die Kraftschlussverbindung zwischen der Schraube 9 und der Gelenkwelle 5.

Das Vorspannelement 7 ist zwischen einer Kopfunterseite 15 eines Schraubenkopfes 17 der Schraube 9 und einer Zentrierkontur 19 der Radnabe 3 zwischengeordnet. Das Vorspannelement 7 liegt radial außenseitig an der Zentrierkontur 19 an, so dass das Vorspannelement 7 im endmontierten Zustand der Radlagerungsanordnung 1 relativ zu der Radnabe 3 zentriert ist und konzentrisch zu dieser angeordnet ist.

Das Vorspannelement 7 ist in der dargestellten Ausführungsform lediglich beispielhaft aus einem dünnen Tiefziehblech aus nichtrostendem Federstahl gefertigt. An dieser Stelle sei explizit darauf hingewiesen, dass das Vorspannelement 7 alternativ auch aus anderen Werkstoffen, wie bspw. Kunststoff gefertigt sein kann. Auch muss es sich nicht zwangsläufig um ein Metallblech aus nichtrostendem Stahl und/oder Federstahl handeln.

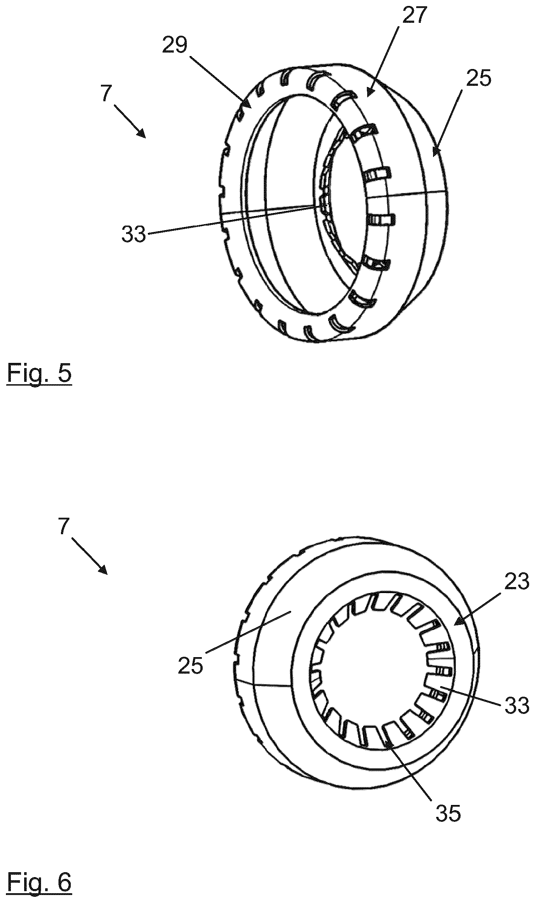

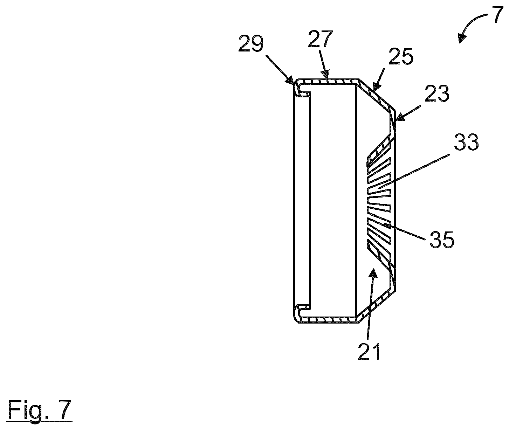

Wie dies in den Figuren 5 bis 7 dargestellt ist, ist das Vorspannelement 7 durch einen zusammengesetzten und einstückig und materialeinheitlich ausgebildeten Körper gebildet. Der Körper weist einen federelastischen Federabschnitt 21, einen Grundabschnitt 23, einen im Wesentlichen konusförmigen Konusabschnitt 25, einen Hülsenabschnitt 27 und einen Umschlagabschnitt 29 auf. Der Hülsenabschnitt 27 weist die Form eines geraden und kreisrunden Hohlzylinders auf. Der Hülsenabschnitt 27 ist dünnwandig ausgeführt und begrenzt nach radial außen einen Aufnahmeraum für den Schraubenkopf 17.

Eine Außenumfangsfläche des Hülsenabschnittes 27 bildet eine Zentrierfläche, auf der eine Radfelge (nicht dargestellt) eines Fahrzeugrades, vorzugsweise formschlüssig und/oder passgenau, aufschiebbar und/oder zur Radnabe zentrierbar ist. Über die Zentrierfläche wird die Radfelge zur Radnabe zentriert und/oder konzentrisch ausgerichtet. Bei der dargestellten Radlagerungsanordnung 1 erfolgt die Rad- und/oder Felgenzentrierung also nicht über die Radnabe 3 selbst, sondern mittels eines separaten Bauteils, und zwar dem Vorspannelement 7, konkret mittels der Außenumfangsfläche des Hülsenabschnittes 27 des Vorspannelementes 7.

Der Hülsenabschnitt 27 geht an seiner der Radnaben 3 abgewandten Seite unmittelbar in den Umschlagabschnitt 29 über. Im Umschlagabschnitt 29 ist das Tiefziehblech unter Bildung eines Blechumschlages, konkret eines parallel offenen Blechumschlages, nach radial innen und in Richtung der Radnabe 3 umgeschlagen. Der Blechumschlag trägt zur mechanischen Stabilität des Vorspannelementes 7 bei. Im Bereich des Hülsenabschnittes 27 und/oder des Umschlagabschnittes 29 können, vorzugsweise schlitzförmige, Ausnehmungen vorgesehen sein, über die Wasser ablaufen kann, welches sich radial innen am Hülsenabschnitt 27 und/oder am Umschlagabschnitt 29 ansammeln kann. Die Ausnehmungen sind in den Figuren 5 bis 7 dargestellt.

Der Hülsenabschnitt 27 geht radnabenseitig unmittelbar in den Konusabschnitt 25 über. Im Konusabschnitt 25 verjüngt sich das Vorspannelement 7, und zwar ausgehend von dem Hülsenabschnitt 27 und in Richtung der Radnabe 3 bis zum Grundabschnitt 23, in welchen Grundabschnitt 23 der Konusabschnitt 25 unmittelbar übergeht. Außenumfangsseitig steht der Konusabschnitt 25, lediglich beispielhaft unmittelbar, in Anlageverbindung mit der Zentrierkontur 19 der Radnabe 3.

Der Grundabschnitt 23 weist die Form einer Lochscheibe auf, die einen mittig zur Lochscheibe angeordneten und kreisrunden Durchlass nach radial außen begrenzt. Der Grundabschnitt 23 ist, vorzugsweise unmittelbar, in Anlageverbindung mit der Zentrierkontur 19 der Radnabe 3. Der Grundabschnitt 23 geht unmittelbar in den Federabschnitt 21 über. Der Federabschnitt 21 ist bei der dargestellten Ausführungsform lediglich beispielhaft durch mehrere Federlaschen 33 gebildet, wie sie in den Figuren 5 bis 7 dargestellt sind. Die Federlaschen 33 erstrecken sich jeweils ausgehend von dem Grundabschnitt 23 mit ihrem freien Ende nach radial innen, das heißt in Richtung des Durchlasses, und zusätzlich in Richtung der Kopfunterseite 15. Die Federlaschen 33 sind voneinander durch schlitzförmige Ausnehmungen 35 beabstandet, wie sie in den Figuren 5 bis 7 dargestellt sind.

Der Federlaschen 33 begrenzen einen dem Vorspannelement 7 zugeordneten Vorspannelement-Durchlass nach radial außen und liegen an der Kopfunterseite 15 unmittelbar an. Die Federlaschen 33 sind im endmontierten Zustand der Radlagerungsanordnung 1 unter mechanischer Vorspannung zwischen dem Grundabschnitt 23 und der Kopfunterseite 15 verspannt. Die Federlaschen 33 stützen sich über den Grundabschnitt 23 an der Zentrierkontur 19 der Radnabe 3 ab und üben, vorzugsweise in Bezug auf die Schraubenlängsachse A, bei der Montage und/oder dem Zusammenbau der Radlagerungsanordnung eine Axialkraft auf die Kopfunterseite 15 aus, und zwar entgegen der positiven Schraubenlängsachsenrichtung und damit entgegen der Einschraubrichtung der Schraube 9. Die Axialkraft wirkt auch auf die Gelenkwelle 5, und zwar derart, dass die Gelenkwelle 5 bei teilweise oder vollständig eingeschraubter Schraube 9 unter der Einwirkung der Axialkraft gegen die Radnabe 3 gedrückt wird. Das heißt, dass, sofern die Stirnverzahnungen 11 und 13 bei der Montage einmal in Zahneingriff gebracht wurde, die Stirnverzahnungen 11 und 13 unter Einwirkung der Axialkraft gegeneinander gedrückt und in Zahneingriff gehalten werden.

Die Federlaschen 33 sind an den Grundabschnitt 23 sehr weich angebunden. So kann beim Eindrehen und/oder Festziehen der Schraube 9 erreicht werden, dass sich nur oder nahezu ausschließlich nur die Federlaschen 33 elastisch verformen, wobei die übrigen Abschnitte des Vorspannelementes 7 unverformt bleiben. Insbesondere der Hülsenabschnitt 27 soll beim Eindrehen und/oder Festziehen der Schraube 9 weder seine Position, noch seine Lage ändern. Dieses Verhalten wird insbesondere auch durch das Vorsehen der schlitzförmigen Ausnehmungen 35 begünstigt. Selbstverständlich kann zusätzlich oder alternativ zu den schlitzförmigen Ausnehmungen 35 auch ein Materialsprung und/oder ein Querschnittssprung vorgesehen sein, um die beschriebene isolierte Verformung der Federlaschen 33 zu erreichen.

Die Radlagerungsanordnung 1 weist ein Mitnahmemittel auf, das in der dargestellten Ausführungsform lediglich beispielhaft der Schraube 9 zugeordnet ist. Das Mitnahemittel ist lediglich beispielhaft durch einen Schraubensicherungslack 37 gebildet, der auf das Außengewinde 14 der Schraube 9 aufgebracht ist. Durch das Mitnahmemittel, konkret durch den Schraubensicherungslack 37, wird die Gewindereibung zwischen dem Außengewinde 14 und dem Innengewinde 10 erhöht. Dadurch baut sich beim Eindrehen der Schraube 9 und bei Kontakt des Innengewindes 10 mit dem Schraubensicherungslack 37 zwischen dem Außengewinde 14 und dem Innengewinde 10 eine Reibkraft auf, die bewirkt, dass sich die Gelenkwelle 5 ab diesem Zeitpunkt zusammen mit der Schraube 9 dreht. Das Mitnahmemittel ist dabei so auf dem Außengewinde 14 angeordnet, dass sich die Gelenkwelle 5 erst dann mit der Schraube 9 dreht, insofern Zahnspitzen der Gelenkwellen-Stirnverzahnung in einer gemeinsamen Ebene mit Zahnspitzen der Radnaben-Stirnverzahnung liegen und/oder insofern die Zahnspitzen der Gelenkwellen-Stirnverzahnung in Zahnlücken der Radnaben-Stirnverzahnung zumindest teilweise einragen.

Die Gelenkwelle 5 dreht sich somit unter gleichzeitiger Einwirkung der Axialkraft so lange mit der Schraube 9, bis die Gelenkwellen-Stirnverzahnung 13 in Zahneingriff mit der Radnaben-Stirnverzahnung 11 tritt. Durch die Axialkraft wird die Gelenkwellen-Stirnverzahnung 13 dann - wie bereits oben beschrieben - in Zahneingriff mit der Radnaben-Stirnverzahnung 11 gehalten.

Nachdem die Gelenkwellen-Stirnverzahnung 13 in Zahneingriff mit der Radnaben-Stirnverzahnung 11 getreten ist, wird beim weiteren Eindrehen der Schraube 9 die Reibkraft überwunden und die Schraube 9 mit dem vordefinierten Anzugsdrehmoment in dem Innengewinde 10 festgedreht, und zwar ohne, dass sich die Gelenkwelle 5 mit der Schraube 9 dreht. Der einmal hergestellte Zahneingriff zwischen der Gelenkwellen-Stirnverzahnung 13 und der Radnaben-Stirnverzahnung 11 bleibt somit beim gesamten Montageprozess der Radlagerungsanordnung 1 zuverlässig bestehen.

Alternativ zum Schraubensicherungslack 37 kann auch jegliche andere Maßnahme zur Anwendung kommen und das Mitnahmemittel bilden, die eine derart hohe Reibkraft zwischen dem Außengewinde 14 der Schraube 9 und dem Innengewinde 10 der Gelenkwelle 5 aufbaut, dass sich die Gelenkwelle 5 zusammen mit der Schraube 9 dreht, bis die Stirnverzahnungen 11 und 13 erstmalig in Zahneingriff stehen und/oder erstmalig in Zahneingriff kommen. Bspw. kann ein Außendurchmesser des Außengewindes 14 einen geringfügig größeren Betrag aufweisen als ein Innendurchmesser des Innengwindes. Bspw. können das Außengewinde 14 und das Innengewinde 10 auch eine entsprechend dimensionierte Passung und/oder Passungspaarung bilden. Bspw. können aber auch das Außengewinde 14 und das Innengewinde 10 unterschiedliche Gewindesteigungen aufweisen. Das heißt, dass die Gewindesteigung des Außengewindes 14 von der Gewindesteigung des Innengewindes 10 abweicht, und zwar um eine Steigungsabweichung, die bei bspw. 0,01 mm liegt. Der Schraubensicherungslack 37 stellt also nur eines von vielen Beispielen, insbesondere von Beispielen einer Beschichtung, dar, um beim Eindrehen der Schraube 9 den Aufbau einer entsprechend hohen Reibkraft zwischen dem Außengewinde 14 und dem Innengewinde 10 zu ermöglichen und/oder zu begünstigen. Noch einmal anders ausgedrückt: Das Mitnahmemittel, wie auch immer es konkret ausgestaltet ist, führt dazu, dass die Schraube 9 abschnittsweise nur schwergängig - also mit hoher Gewindereibung - in das Innengewinde 10 der Gelenkwelle 5 eindrehbar ist.

Das Mitnahmemittel, konkret der Schraubensicherungslack 37, sind in negativer Schraubenlängsachsenrichtung zumindest soweit von einer Schraubenspitze der Schraube 9 beabstandet, dass sich die hohe Reibkraft erst dann aufbaut, sobald ein Kontakt zwischen den Stirnverzahnungen 11 und 13 besteht. So kann verhindert werden, dass sich die Gelenkwelle 5 beim Eindrehen zusammen mit der Schraube 9 über die nächstliegende Zahn-auf-Lücke-Stellung hinaus dreht.

Die Radnabe 3 weist einen Radflansch 39 auf, an dem das Fahrzeugrad (nicht dargestellt) befestigt ist. Zusätzlich ist der Radnabe 3 ein Radnaben-Durchlass zugeordnet, der von der Radnabe 3 nach radial außen begrenzt wird und durch den sich die Schraube 9 erstreckt.

Nachfolgend ist ein Verfahren zur Montage der Radlagerungsanordnung 1 anhand der Figuren 1 bis 4 detailliert beschrieben.

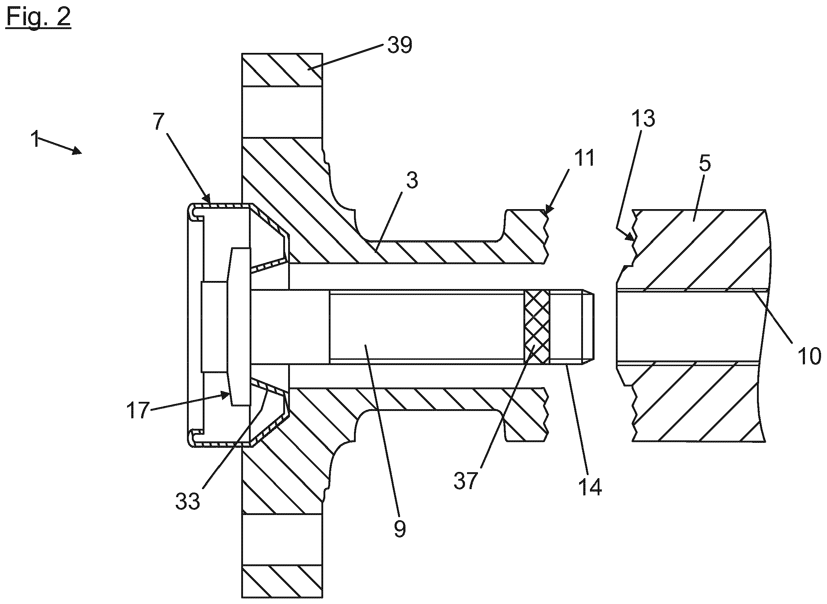

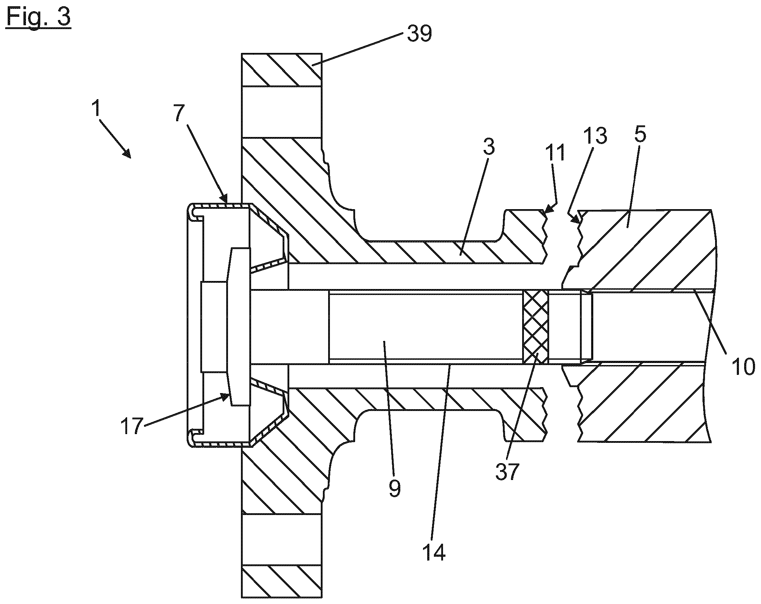

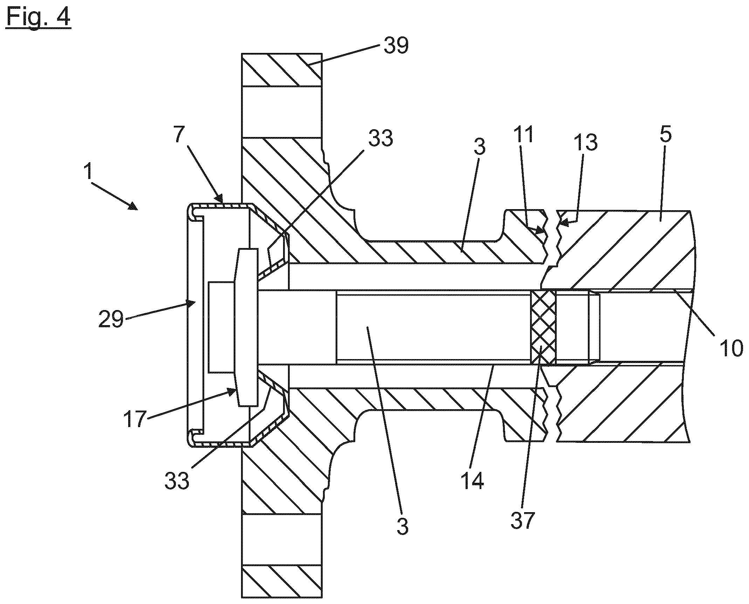

Das Verfahren weist einen Bereitstellungsschritt (siehe Figur 2), einen Vormontageschritt (Figur 3) und einen Endmontageschritt (siehe Figur 4) auf. Der Bereitstellungsschritt wird vor dem Vormontageschritt durchgeführt. Der Vormontageschritt wird vor dem Endmontageschritt durchgeführt.

Bei dem Bereitstellungsschritt werden die Gelenkwelle 5, die Radnabe 3, das Vorspannelement 7 und die Schraube 9 bereitgestellt. Zusätzlich wird die Schraube 9 mit ihrem Schaft durch den Vorspannelement-Durchlass und durch den Radnaben-Durchlass geführt, wie dies in Figur 2 dargestellt ist. Die Federlaschen 33 sind mechanisch entspannt und liegen zunächst kraftfrei an der Kopfunterseite 15 an. Das Vorspannelement 7 liegt mit dem Grundabschnitt 23 und dem Konusabschnitt 25 zunächst kraftfrei an der Zentrierkontur 19 an. Das Außengewinde 14 der Schraube 9 steht noch außer Gewindeeingriff mit dem Innengewinde 10 der Gelenkwelle 5. Die Stirnverzahnungen 11 und 13 berühren sich noch nicht. Die Schraube 9, das Vorspannelement 7 und die Radnabe 3 bilden nach Abschluss des Bereitstellungsschrittes eine Vormontagebaugruppe.

Anschließend wird der Vormontageschritt durchgeführt, wie er in der Figur 3 gezeigt ist. Bei dem Vormontageschritt wird die Vormontagebaugruppe und die Gelenkwelle 5 zueinander geführt und die Schraube 9 wird in das Innengewinde 10 der Gelenkwelle 5 eingedreht bis das Außengewinde 14 der Schraube 9 und das Innengewinde 10 der Gelenkwelle 5 in zumindest geringfügigem Gewindeeingriff stehen. Nach Abschluss des Vormontageschrittes stehen die Stirnverzahnungen 11 und 13 noch außer Zahneingriff. Der Schraubensicherungslack 37 befindet sich noch außerhalb des Innengewindes 10 der Gelenkwelle 5 und die Federlaschen 33 liegen nach wie vor kraftfrei an der Kopfunterseite 15 an.

Nach Abschluss des Vormontageschrittes wird der Endmontageschritt durchgeführt, wie er anhand der Figur 4 veranschaulicht ist. Bei dem Endmontageschritt wird die Schraube 9 zunächst weiter in das Innengewinde 10 der Gelenkwelle 5 eingedreht. Beim weiteren Eindrehen der Schraube 9 in das Innengewinde 10 der Gelenkwelle 5 verkürzt sich, in Bezug auf die und/oder parallel zu der Schraubenlängsachse A, der Axialabstand zwischen der Kopfunterseite 15 und der Gelenkwelle 5. Durch das Verkürzen des Axialabstandes kommen die Stirnverzahnungen 11 und 13 beim Eindrehen der Schraube 9 in Kontakt. Der Kontakt kann dadurch gebildet sein, dass sich die Stirnverzahnungen 11 und 13 in einer Zahn-auf-Zahn-Stellung berühren oder in einer Zahn-auf-Lücke-Stellung befinden.

Berühren sich die Stirnverzahnungen 11 und 13 in einer Zahn-auf-Zahn-Stellung, so verkürzt sich der Axialabstand zwischen der Kopfunterseite 15 und der Gelenkwelle 5 weiter, wodurch sich die Federlaschen 33 zwischen der Kopfunterseite 15 einerseits und dem Grundabschnitt 23 und/oder der Zentrierkontur 19 andererseits elastisch vorspannen, und zwar unter Aufbau der Axialkraft. Diese Axialkraft wirkt auch auf die Stirnverzahnungen 11 und 13 und drückt diese in der Zahn-auf-Zahn-Stellung gegeneinander.

Erreicht nun beim weiteren Eindrehen der Schraubensicherungslack 37 das Innengewinde 10 und wird er in dieses eingedreht, so baut sich, vorzugsweise sprunghaft, eine hohe Reibkraft zwischen der Schraube 9 und dem Innengewinde 10 der Gelenkwelle 5 auf. Aufgrund der hohen Reibkraft wird beim weiteren Eindrehen der Schraube 9 die Gelenkwelle 5 zusammen mit der Schraube 9 verdreht. Da gleichermaßen auch die Axialkraft auf die Kopfunterseite 15 wirkt, verdreht sich die Gelenkwelle 5 zusammen mit der Schraube 9 von der Zahn-auf-Zahn-Stellung in die nächstliegende und/oder benachbarte Zahn-auf-Lücke-Stellung. Dabei rutschen die Zähne der Gelenkwellen-Stirnverzahnung 13 in die Zahnlücken der Radnaben-Stirnverzahnung 11, und zwar unter geringfügigem und nur zwischenzeitlichem Abbau der Axialkraft. Wird die Schraube 9 dann weiter eingedreht, stützen sich die Zähne der Gelenkwellen-Stirnverzahnung 13 in Umfangsrichtung an Zahnflanken der Zähne der Radnaben-Stirnverzahnung 11 ab, so dass die Schraube 9 auch unter Einwirkung der hohe Reibkraft weiter eingedreht werden kann, ohne dass die Stirnverzahnungen 11 und 13 die Zahn-auf-Lücke-Stellung verlassen und/oder sich die Gelenkwelle 5 mit der Schraube 9 weiter dreht. Beim weiteren Eindrehen der Schraube 9 unter Einwirkung der hohen Reibkraft nimmt die Axialkraft wieder zu und die Zahn-auf-Lücke-Stellung bleibt auch beim weiteren Eindrehen der Schraube 9 erhalten, und zwar bis die Schraube 9 mit dem vordefinierten Anzugsdrehmoment in das Innengewinde 10 eingedreht ist und der endmontierte Zustand der Radlagerungsanordnung 1 erreicht ist. Im endmontierten Zustand der Radlagerungsanordnung 9 liegt die Kopfunterseite 15 plan auf dem Grundabschnitt 23 auf.

Denkbar ist natürlich auch, dass die Stirnverzahnungen 11 und 13 beim Endmontageschritt zufällig zu keinem Zeitpunkt in der Zahn-auf-Zahn-Stellung stehen. Dann stützen sich die Zähne der Gelenkwellen-Stirnverzahnung 13 beim Eindrehen der Schraube 9 sogleich in Umfangsrichtung an den Zahnflanken der Zähne der Radnaben-Stirnverzahnung 11 ab und die Schraube 9 kann unter Einwirkung der hohen Reibkraft eingedreht werden, ohne dass die Stirnverzahnungen 11 und 13 die Zahn-auf-Lücke-Stellung verlassen. Außerdem kommt es in diesem Fall zu keinem zwischenzeitlichen, geringfügigen Abbau der Axialkraft und die Schraube 9 kann mit dem vordefinierten Anzugsdrehmoment in das Innengewinde 10 eingedreht und der endmontierte Zustand der Radlagerungsanordnung 1 (siehe Figur 1) erreicht werden.

### BEZUGSZEICHENLISTE:

- 1: Radlagerungsanordnung
- 3: Radnabe
- 5: Gelenkwelle
- 7: Vorspannelement
- 9: Schraube
- 10: Innengewinde
- 11: Radnaben-Stirnverzahnung
- 13: Gelenkwellen-Stirnverzahnung
- 14: Außengewinde
- 15: Kopfunterseite
- 17: Schraubenkopf
- 19: Zentrierkontur
- 21: Federabschnitt
- 23: Grundabschnitt
- 25: Konusabschnitt
- 27: Hülsenabschnitt
- 29: Umschlagabschnitt
- 33: Federlasche
- 35: Ausnehmung
- 37: Schraubensicherungslack
- 39: Radflansch

- A: Schraubenlängsachse

## Patentansprüche

1. Radlagerungsanordnung, vorzugsweise für ein Kraftfahrzeug, mit:
einer Gelenkwelle (5),
einer Radnabe (3),
einer Schraube (9) mit einem Schraubenkopf (17), und
einem Vorspannelement (7),
wobei die Radnabe (3) mittels der Schraube (9) mit der Gelenkwelle (5) verbunden ist, und
wobei das Vorspannelement (7) zwischen dem Schraubenkopf (17), vorzugsweise einer Kopfunterseite (15) des Schraubenkopfes (17), und der Radnabe (3) angeordnet und/oder verspannt ist,
**dadurch gekennzeichnet, dass**
das Vorspannelement (7) einen Hülsenabschnitt (27) aufweist, und dass der Hülsenabschnitt (27), vorzugsweise eine Außenumfangsfläche des Hülsenabschnittes (27), eine Radzentrierfläche für ein Fahrzeugrad, vorzugsweise für eine Felge eines Fahrzeugrades, und/oder eine Bremsscheibe bildet.

2. Radlagerungsanordnung nach Anspruch 1,
**dadurch gekennzeichnet, dass**
das Vorspannelement (7) einen, vorzugsweise federelastischen, Federabschnitt (21) aufweist, der zwischen dem Schraubenkopf (17), vorzugsweise einer Kopfunterseite (15) des Schraubenkopfes (17), und der Radnabe (3) angeordnet und/oder verspannt ist,
und/oder
dass die Gelenkwelle (5) eine Gelenkwellen-Stirnverzahnung (13) aufweist, die mit einer Radnaben-Stirnverzahnung (11) der Radnabe (3) in Zahneingriff steht.

3. Radlagerungsanordnung nach Anspruch 1 oder 2,
**dadurch gekennzeichnet, dass**
das Vorspannelement (7), vorzugsweise ein Federabschnitt (21) des Vorspannelementes (7), an der Radnabe (3), vorzugsweise an einer Zentrierkontur (19) der Radnabe (3), abgestützt ist und bei einer Montage und/oder einem Zusammenbau der Radlagerungsanordnung eine Axialkraft auf den Schraubenkopf (17), vorzugsweise auf eine Kopfunterseite (15) des Schraubenkopfes (17), ausübt, wobei bevorzugt vorgesehen ist, dass das Vorspannelement (7) die Axialkraft, vorzugsweise in Bezug auf eine Schraubenlängsachse (A) der Schraube (9), entgegen einer Einschraubrichtung der Schraube (9) ausübt.

4. Radlagerungsanordnung nach einem der Ansprüche 2 oder 3,
**dadurch gekennzeichnet, dass**
der Federabschnitt (21) durch Federlaschen (33) gebildet ist, die in Umfangsrichtung um einen Vorspannelement-Durchlass verteilt angeordnet sind und unter Zwischenordnung von schlitzförmigen Ausnehmungen (35) voneinander beabstandet sind.

5. Radlagerungsanordnung nach einem der Ansprüche 2 bis 4,
**dadurch gekennzeichnet, dass**
das Vorspannelement (7) einen Grundabschnitt (23) und einen, vorzugsweise konusförmigen, Konusabschnitt (25) aufweist, und dass der Grundabschnitt (23) und/oder der Konusabschnitt (25) und/oder der Hülsenabschnitt (27) in Anlageverbindung mit der Radnabe (3), vorzugsweise einer Zentrierkontur (19) der Radnabe (3), stehen.

6. Radlagerungsanordnung nach einem der vorhergehenden Ansprüche,
**dadurch gekennzeichnet, dass**
die Radlagerungsanordnung (1) ein Mitnahmemittel aufweist und/oder dass der Radlagerungsanordnung (1) ein Mitnahmittel zugeordnet ist, wobei bevorzugt vorgesehen ist, dass durch das Mitnahmemittel eine Gewindereibung zwischen einem Außengewinde (14) der Schraube (9) und einem Innengewinde (10) der Gelenkwelle (5), in Bezug auf ein Außengewinde (14) der Schraube (9), zumindest abschnittsweise erhöht ist.

7. Radlagerungsanordnung nach Anspruch 6,
**dadurch gekennzeichnet, dass**
das Mitnahmemittel durch eine Beschichtung, vorzugsweise durch einen Schraubensicherungslack (37), gebildet ist, die auf die Schraube (9), vorzugsweise auf ein Außengewinde (14) der Schraube (9), aufgetragen ist,
und/oder
dass das Mitnahmemittel dadurch gebildet ist, dass ein Durchmesser des Außengewindes (14), vorzugsweise ein Kern-, Außen, und/oder Flankendurchmesser des Außengewindes (14), größer dimensioniert ist, als ein Durchmesser des Innengewindes (10), vorzugsweise ein Kern-, Außen, und/oder Flankendurchmesser des Innengewindes (10), und/oder
dass das Mitnahmemittel dadurch gebildet ist, dass eine Gewindesteigung eines Außengewindes (14) der Schraube (9) um eine Steigungsabweichung von einer Gewindesteigung des Innengewindes (10) der Gelenkwelle (5) abweicht.

8. Fahrzeug mit einer Radlagerungsanordnung nach einem der vorhergehenden Ansprüche.

9. Verfahren zur Montage einer Radlagerungsanordnung nach einem der Ansprüche 1 bis 7, mit:
einem Bereitstellungsschritt, bei dem die Gelenkwelle (5), die Radnabe (3), das Vorspannelement (7) und die Schraube (9) bereitgestellt werden,
einem Vormontageschritt, bei dem die Radnabe (3) und die Gelenkwelle (5) zueinander geführt und/oder aneinander angenähert werden, und bei dem die Schraube (9) in das Innengewinde (10) der Gelenkwelle (5) teilweise eingedreht wird, und
einem Endmontageschritt, bei dem die Schraube (9) weiter in das Innengewinde (10) eingedreht und mit einem vordefinierten Anzugsdrehmoment festgedreht wird,
wobei das Vorspannelement (7) zwischen dem Schraubenkopf (17), vorzugsweise einer Kopfunterseite (15) des Schraubenkopfes (17), und der Radnabe (3) angeordnet und/oder verspannt wird, und
wobei das Vorspannelement (7) einen Hülsenabschnitt (27) aufweist, und wobei der Hülsenabschnitt (27), vorzugsweise eine Außenumfangsfläche des Hülsenabschnittes (27), eine Radzentrierfläche für ein Fahrzeugrad, vorzugsweise für eine Felge eines Fahrzeugrades, und/oder eine Bremsscheibe bildet.

## Claims

1. Wheel bearing arrangement, preferably for a motor vehicle, with:
a cardan shaft (5),
a wheel hub (3),
a screw (9) with a screw head (17), and
a prestressing element (7),
wherein the wheel hub (3) is connected to the cardan shaft (5) by means of the screw (9), and
wherein the prestressing element (7) is arranged and/or tensioned between the screw head (17), preferably a lower head side (15) of the screw head (17), and the wheel hub (3),
**characterized in that**
the prestressing element (7) has a sleeve portion (27), and **in that** the sleeve portion (27), preferably an outer circumferential face of the sleeve portion (27), forms a wheel centering face for a vehicle wheel, preferably for a rim of a vehicle wheel, and/or a brake disk.

2. Wheel bearing arrangement according to claim 1,
**characterized in that**
the prestressing element (7) has a, preferably resilient, spring portion (21) which is arranged and/or tensioned between the screw head (17), preferably a lower head side (15) of the screw head (17), and the wheel hub (3),
and/or
**in that** the cardan shaft (5) has a cardan shaft serration (13) which is in toothed engagement with a wheel hub serration (11) of the wheel hub (3).

3. Wheel bearing arrangement according to claim 1 or 2,
**characterized in that**
the prestressing element (7), preferably a spring portion (21) of the prestressing element (7), is supported on the wheel hub (3), preferably on a centering contour (19) of the wheel hub (3), and during assembly and/or disassembly of the wheel bearing arrangement applies an axial force to the screw head (17), preferably to a lower head side (15) of the screw head (17), wherein there is preferably provision for the prestressing element (7) to apply the axial force, preferably with respect to a longitudinal screw axis (A) of the screw (9), counter to a screwing-in direction of the screw (9).

4. Wheel bearing arrangement according to any one of claims 2 or 3,
**characterized in that**
the resilient portion (21) is formed through resilient flaps (33) which are arranged in a state distributed in the circumferential direction about a prestressing element passage and are spaced apart from each other with slot-like recesses (35) being interposed.

5. Wheel bearing arrangement according to any one of claims 2 to 4,
**characterized in that**
the prestressing element (7) has a base portion (23) and a preferably conical cone portion (25), and **in that** the base portion (23) and/or the cone portion (25) and/or the sleeve portion (27) are connected in abutment to the wheel hub (3), preferably a centering contour (19) of the wheel hub (3).

6. Wheel bearing arrangement according to any one of the preceding claims,
**characterized in that**
the wheel bearing arrangement (1) has a carrier means and/or **in that** the wheel bearing arrangement (1) is associated with a carrier means, wherein there is preferably provision for a thread friction between an outer thread (14) of the screw (9) and an inner thread (10) of the cardan shaft (5) to be at least partially increased with respect to an outer thread (14) of the screw (9) by the carrier means.

7. Wheel bearing arrangement according to claim 6,
**characterized in that**
the carrier means is formed by a coating, preferably by a screw securing paint (37) which is applied to the screw (9), preferably to an outer thread (14) of the screw (9),
and/or
**in that** the carrier means is formed by a diameter of the outer thread (14), preferably a core, outer and/or flank diameter of the outer thread (14) being larger than a diameter of the inner thread (10), preferably a core, outer, and/or flank diameter of the inner thread (10),
and/or
**in that** the carrier means is formed by a thread pitch of an outer thread (14) of the screw (9) deviating by a pitch deviation from a thread pitch of the inner thread (10) of the cardan shaft (5).

8. Motor vehicle with a wheel bearing arrangement according to any one of the preceding claims.

9. Method for assembly of a wheel bearing arrangement according to any one of claims 1 to 7, having:
a preparation step, in which the cardan shaft (5), the wheel hub (3), the prestressing element (7) and the screw (9) are prepared,
a pre-assembly step in which the wheel hub (3) and the cardan shaft (5) are guided relative to each other and/or moved towards each other, and in which the screw (9) is partially screwed into the inner thread (10) of the cardan shaft (5), and
a final assembly step in which the screw (9) is screwed further into the inner thread (10) and is tightened with a predefined tightening torque,
wherein the prestressing element (7) is arranged and/or tensioned between the screw head (17), preferably a lower head side (15) of the screw head (17), and the wheel hub (3), and
wherein the prestressing element (7) has a sleeve portion (27), and wherein the sleeve portion (27), preferably an outer circumferential face of the sleeve portion (27), forms a wheel centering face for a vehicle wheel, preferably for a rim of a vehicle wheel, and/or a brake disk.

## Revendications

1. Ensemble de roulement de roue, de préférence pour un véhicule automobile avec :
un arbre de transmission (5),
un moyeu de roue (3),
une vis (9) avec une tête de vis (17) et
un élément de précontrainte (7),
dans lequel le moyeu de roue (3) est relié à l'arbre de transmission (5) au moyen de la vis (9), et
dans lequel l'élément de précontrainte (7) est agencé et/ou tendu entre la tête de vis (17), de préférence un côté inférieur de tête (15) de la tête de vis (17), et le moyeu de roue (3),
**caractérisé en ce que**
l'élément de précontrainte (7) présente une section de manchon (27) et **en ce que** la section de manchon (27), de préférence une surface circonférentielle cextérieure de la section de manchon (27), forme une surface de centrage de roue pour une roue de véhicule, de préférence pour une jante d'une roue de véhicule et/ou un disque de frein.

2. Ensemble de roulement de roue selon la revendication 1,
**caractérisé en ce que**
l'élément de précontrainte (7) présente une section de ressort (21), de préférence élastique, qui est agencée et/ou tendue entre la tête de vis (17), de préférence un côté inférieur de tête (15) de la tête de vis (17), et le moyeu de roue (3),
et/ou
l'arbre de transmission (5) présente une denture avant d'arbre de transmission (13) qui est en prise dentée avec une denture avant (11) du moyeu de roue (3).

3. Ensemble de roulement de roue selon la revendication 1 ou 2,
**caractérisé en ce que**
l'élément de précontrainte (7), de préférence une section de ressort (21) de l'élément de précontrainte (7), est en appui au niveau du moyeu de roue (3), de préférence au niveau d'un contour de centrage (19) du moyeu de roue (3) et exerce lors d'un montage et/ou d'un assemblage de l'ensemble de roulement de roue une force axiale sur la tête de vis (17), de préférence sur un côté inférieur de tête (15) de la tête de vis (17), dans lequel il est de préférence prévu que l'élément de précontrainte (7) exerce la force axiale, de préférence par rapport à un axe longitudinal de vis (A) de la vis (9), dans le sens inverse à un sens de vissage de la vis (9).

4. Ensemble de roulement de roue selon l'une quelconque des revendications 2 ou 3,
**caractérisé en ce que**
la section de ressort (21) est formée par des languettes de ressort (33) qui sont agencées réparties dans une direction circonférentielle autour d'un passage d'élément de précontrainte et sont espacées les unes des autres en interposant des évidements (35) en forme de fente.

5. Ensemble de roulement de roue selon l'une quelconque des revendications 2 à 4,
**caractérisé en ce que**
l'élément de précontrainte (7) présente une section de base (23) et une section de cône (25) de préférence conique, et **en ce que** la section de base (23) et/ou la section de cône (25) et/ou la section de manchon (27) sont en liaison d'appui avec le moyeu de roue (3), de préférence avec un contour de centrage (19) du moyeu de roue (3).

6. Ensemble de roulement de roue selon l'une quelconque des revendications précédentes, **caractérisé en ce que**
**caractérisé en ce que**
l'ensemble de roulement de roue (1) présente un moyen d'entraînement et/ou **en ce qu'**un moyen d'entraînement est associé à l'ensemble de roulement de roue (1), dans lequel il est de préférence prévu qu'un frottement de filetage entre un filetage extérieur (14) de la vis (9) et un filetage intérieur (10) de l'arbre de transmission (5), est au moins par sections augmenté par rapport à un filetage extérieur (14) de la vis (9) par le moyen d'entraînement.

7. Ensemble de roulement de roue selon la revendication 6,
**caractérisé en ce que**
le moyen d'entraînement est formé par un revêtement, de préférence par un vernis de protection de vis (37) qui est appliqué sur la vis (9), de préférence sur un filetage extérieur (14) de la vis (9),
et/ou
le moyen d'entraînement est formé par un diamètre du filetage extérieur (14), de préférence un diamètre de cœur, extérieur et/ou de flanc du filetage extérieur (14) plus grand qu'un diamètre du filetage intérieur (10), de préférence un diamètre de cœur, extérieur et/ou de flanc du filetage intérieur (10),
et/ou
le moyen d'entraînement est formé par un pas de filetage d'un filetage extérieur (14) de la vis (9) divergeant selon un écart de pas d'un pas de filetage du filetage intérieur (10) de l'arbre de transmission (5).

8. Véhicule avec un ensemble de roulement de roue selon l'une quelconque des revendications précédentes.

9. Procédé de montage d'un ensemble de roulement de roue selon l'une quelconque des revendications 1 à 7 avec :
une étape de fourniture pour laquelle l'arbre de transmission (5), le moyeu de roue (3), l'élément de précontrainte (7) et la vis (9) sont fournis,
une étape de prémontage pour laquelle le moyeu de roue (3) et l'arbre de transmission (5) sont guidés l'un par rapport à l'autre et/ou sont rapprochés l'un de l'autre et pour laquelle la vis (9) est partiellement vissée dans le filetage intérieur (10) de l'arbre de transmission (5) et
une étape de montage final pour laquelle la vis (9) est davantage vissée dans le filetage intérieur (10) et est tendue avec un couple de serrage prédéfini,
dans lequel l'élément de précontrainte (7) est agencé et/ou tendu entre la tête de vis (17), de préférence un côté inférieur de tête (15) de la tête de vis (17), et le moyeu de roue (3), et
dans lequel l'élément de précontrainte (7) présente une section de manchon (27) et en ce que la section de manchon (27), de préférence une surface circonférentielle extérieure de la section de manchon (27), forme une surface de centrage de roue pour une roue de véhicule, de préférence pour une jante d'une roue de véhicule et/ou un disque de frein.
